**Europäisches Patentamt**

**European Patent Office**

**Office européen des brevets**

(19)

(11) Veröffentlichungsnummer: **0 310 974**
**A2**

## (12) EUROPÄISCHE PATENTANMELDUNG

(21) Anmeldenummer: 88116266.3

(22) Anmeldetag: 30.09.88

(51) Int. Cl.4: **C08G 18/38 , C08G 18/66**

(30) Priorität: 09.10.87 DE 3734163

(43) Veröffentlichungstag der Anmeldung:
**12.04.89 Patentblatt 89/15**

(84) Benannte Vertragsstaaten:
**BE DE FR GB IT SE**

(71) Anmelder: **BAYER AG**

**D-5090 Leverkusen 1, Bayerwerk(DE)**

(72) Erfinder: **Rasshofer, Werner, Dr.**
**Leopold-Gmelin-Strasse 31**
**D-5000 Köln 80(DE)**
Erfinder: **Schmidt, Manfred, Dr.**
**Zeisigstrasse 5**
**D-4047 Dormagen(DE)**

(54) **Verfahren zur Herstellung von gegebenenfalls zellförmigen Formkörpern.**

(57) Ein neues Verfahren zu Herstellung von gegebenenfalls zellförmigen Formkörpern auf Polyurethan- und/oder Polyharnstoff-Basis mit einer geschlossenen Oberfläche durch Umsetzung nach dem Reaktionspritzgußverfahren in einer geschlossenen Form eines Reaktionsgemisches aus

a) mindestens einem organischen Polyisocyanat,

b) mindestens einer höhermolekularen Verbindung mit gegenüber Isocyanatgruppen reaktionsfähigen Gruppen,

c) gegebenenfalls mindestens einer niedermolekularen Verbindung mit gegenüber Isocyanatgruppen reaktionsfähigen Gruppen, und gegebenenfalls

d) den aus der Polyurethanchemie an sich bekannten Hilfs- und Zusatzstoffen,
wobei als weitere Komponente

e) in Abwesenheit der Komponente b) hergestellte, pulverförmige Oligoharnstoffe eines unter 5000 liegenden mittleren Molekulargewichts
in einer Menge von 0,01 bis 3 Gew.-%, bezogen auf das Gewicht der Komponenten a), b), c) und d) mitverwendet werden. Die zusätzliche Komponente e) bewirkt eine verbesserte Entformbarkeit und verbesserte physikalische Eigenschaften der Formkörper.

## Verfahren zur Herstellung von gegebenenfalls zellförmigen Formkörpern

Die Erfindung betrifft ein neues Verfahren zur Herstellung von gegebenenfalls zellförmigen Formkörpern auf Polyurethan- und/oder Polyharnstoff-Basis unter Verwendung von bestimmten, Harnstoffgruppen aufweisenden Zusatzmitteln, wobei sich das Verfahren durch eine leichtere Durchführbarkeit, insbesondere verbesserte Entformbarkeit und sich die Formkörper durch verbesserte physikalische Eigenschaften auszeichnen.

Die Herstellung von Formkörpern mit einer geschlossenen Außenhaut und einem zelligen Kern nach dem Isocyanat-Polyadditionsverfahren ist grundsätzlich bekannt (vgl. z.B. Kunststoffe 60, Seiten 3 bis 7 (1970) oder DE-AS 1 196 864). Bei geeigneter Wahl der Ausgangskomponenten ist es bei diesem Verfahren möglich, sowohl elastische als auch starre Formkörper herzustellen. Falls bei dem Verfharen keine oder nur geringe Mengen an Treibmitteln mitverwendet werden, entstehen massive Formteile. Die Verarbeitung der Rohstoffe erfolgt vorzugsweise nach dem sogenannten Reaktionspritzgußverfahren (RSG- oder RIM- Verfahren). Es handelt sich dabei um eine Fülltechnik, bei der die flüssigen Ausgangskomponenten über sogenannte zwangsgesteuerte Mischköpfe innerhalb kürzester Zeit in die jeweilige Form eingetragen werden. Bei der Herstellung von Formteilen für den Automobilbau werden hierbei beispeilsweise di- und/oder trifunktionelle Polyetherpolyole, beispeilsweise des Molekulargewichtsbereichs 3000 bis 7000 und niedermolekulare Diole wie Ethylenglykol und/oder Butandiol-1,4 bzw. aromatische Diamine mit sterisch gehinderten Aminogruppen mit Polyisocyanaten, vorzugsweise flüssigen Polyisocyanaten bzw. Polyisocyanatgemischen der Diphenylmethanreihe, gegebenenfalls in Gegenwart von Treibmitteln zur Reaktion gebracht (vgl. z.B. US-PS 4 218 543 oder US-PS 4 065 410). Die so hergestellten Formteile weisen ein sehr gutes mechanisches Eigenschaftsniveau auf, dennoch befriedigen die bekannten Verfahren noch nicht alle Anforderungen der Praxis in vollem Umfang. Insbesondere bei der Herstellung von kompliziert aufgebauten Formteilen, beispielsweise bei der Herstellung von Stoßdämpfern für Kraftfahrzeuge mit intergriertem Kühlergrill zeigt sich, daß die Verfahren des Standes der Technik oftmals zu Formteilen führen, die noch einen zu hohen Schrumpf aufweisen, d.h. die Formteile schrumpfen auf die Form auf und lassen sich schlecht entformen bzw. werden oftmals bei der Entformung beschädigt.

Es war daher die der Erfindung zugrundeliegende Aufgabe ein neues Verfahren zur Herstellung von gegebenenfalls zellförmigen Formkörpern auf Polyurethan- und/oder Polyharnstoff-Basis zur Verfügung zu stellen, welches auch bei der Herstellung von komplizierten Formkörpern ein problemloses Entformen der Formteile durch praktisch nicht mehr vorhandenen Schrumpf gestattet.

Diese Aufgabe konnte durch das nachstehend näher beschriebene erfindungsgemäße Verfahren gelöst werden. Wesentlicher Punkt beim erfindungsgemäßen Verfahren ist die Mitverwendung von oligomeren Harnstoffen e) der nachstehend näher beschriebenen Art.

Die Mitverwendung von Polyharnstoffen bei der Herstellung von Polyurethankunststoffen ist im Prinzip bereits bekannt (vgl. z.B. DE-OS 3 321 497, EP-A-0 209 807 oder US-PS 4 042 537). Bei diesen Verfahren des Standes der Technik werden die Polyharnstoffe im allgemeinen in situ in höhermolekularen Polyhydroxylverbindungen als Reaktiosmedium hergestellt, so daß direkt eine, als Reaktionspartner für die Polyisocyanatkomponente geeignete, Dispersion der Polyharnstoffe in den höhermolekularen Polyhydroxylverbindungen anfällt. Im allgemeinen handelt es sich im übrigen bei den Polyharnstoffen des genannten Standes der Technik um hochmolekulare Produkte, die unter Verwendung von nahezu äquivalenten Mengen an Polyaminen, vorzugsweise Diaminen und Polyisocyanaten, vorzugsweise Diisocyanaten hergestellt worden sind. Lediglich beim Verfahren der EP-A-0 209 807 wird die Verwendung von vergleichsweise niedermolekularen Polyharnstoffen, die unter Verwendung eines Diaminüberschusses erhalten worden sind, in Betracht gezogen.

Gemäß US-PS 4 042 537 werden die in situ hergestellten, Polyharnstoff aufweisenden Dispersionen zur Herstellung von flexiblen Weichschaumstoffen verwendet, wobei die Polyharnstoffe eine Erhöhung der Härte bei gleichzeitig guter Flexibilität der Weichschaumstoffe bewirken. Gemäß DE-OS 32 31 407 erfolgt die Mitverwendung der in situ hergestellten Dispersionen von hochmolekularen Polyharnstoffen in Polyetherpolyolen bei der Herstellung von wärmebeständigen Isocyanuratgruppen aufweisenden Kunststoffen zwecks Verbesserung ihrer mechanischen Eigenschaften, insbesondere zwecks Verringerung ihres Schrumpfes. Es konnte jedoch aus her Lehre dieser Vorveröffentlichung nicht hergeleitet werden, daß die Verwendung von vergleichsweise niedermolekularen Oligoharnstoffen, die in Abwesenheit von höhermolekularen Polyhydroxylverbindungen hergestellt worden sind, bei der Herstellung von Formteilen auf Polyurethan- bzw. Polyharnstoff-Basis gemäß dem nachstehend näher beschriebenen erfindungsgemäßen Verfahren zu einer deutlichen Reduzierung der Schrumpfneigung führen würde.

Gemäß EP-A-0 209 807 erfolgt der Einsatz der vergleichsweise niedermolekularen Oligoharnstoffe bei einem Verfahren zur Herstellung von Polyurethan-Elastomeren unter Anwendung der Niederdruck-Verfahrenstechnik, wobei die in situ hergestellten Harnstoffdispersionen in höhermolekularen Polyhydroxylverbindungen eine Erhöhung der Wärmeformbeständigkeit bewirkt. Auch aus der Lehre dieser Vorveröffentlichung konnten keine richtungsweisenden Hinweise bezüglich der Lösung der obengenannten Aufgabe im Sinne des nachstehend näher beschriebenen erfindungsgemäßen Verfahrens hergeleitet werden.

Gegenstand der Erfindung ist ein Verfahren zur Herstellung von gegebenenfalls zellförmigen Formkörpern auf Polyurethan- und/oder Polyharnstoff-Basis mit einer geschlossenen Oberfläche durch Umsetzung nach dem Reaktionsspritzgußverfahren in einer geschlossenen Form eines Reaktionsgemisches aus

a) mindestens einem organischen Polyisocyanat,

b) mindestens einer Verbindung mit einem Molekulargewicht zwischen 400 und 12 000, welche mindestens zwei gegenüber Isocyanatgruppen reaktionsfähige Gruppen aufweist,

c) gegebenenfalls mindestens einer Verbindung mit einem Molekulargewicht zwischen 32 und 399 mit mindestens zwei gegenüber Isocyanatgruppen reaktionsfähigen Gruppen, und gegebenenfalls

d) den aus der Polyurethanchemie bekannten Hilfs- und Zusatzstoffen,

dadurch gekennzeichnet, daß man dem Reaktionsgemisch als weitere Komponente

e) in Abwesenheit der Komponente b) hergestellte, pulverförmige Oligoharnstoffe eines unter 5000 liegenden mittleren Molekulargewichts, die durch Umsetzung von organischen Polyisocyanaten mit Hydrazin und/oder organischen Diaminen erhalten worden sind,

in einer Menge von 0,01 bis 3 Gew.-%, bezogen auf das Gewicht der Komponenten a), b), c) und d) einverleibt. Ausgangsmaterialien a) für das erfindungsgemäße Verfahren sind beliebige organische Polyisocyanate, wie sie beispielsweise in der DE-PS 2 404 310, Kolonne 3, Zeile 39 bis Kolonne 4, Zeile 56 beispielhaft offenbart sind.

Bevorzugt werden beim erfindungsgemäßen Verfahren organische Polyisocyanate mit ausschließlich aromatisch gebundenen Isocyanatgruppen einer (mittleren) NCO-Funktionalität von 2 bis 2,3 eingesetzt. Zu den besonders bevorzugten Polyisocyanaten gehören bei Raumtemperatur flüssige Polyisocyanate bzw. Polyisocyanatgemische der Diphenylmethan-Reihe, d.h. bei Raumtemperatur flüssige Gemische von 4,4'-Diisocyanatodiphenylmethan mit 2,4'-Diisocyanatodiphenylmethan und gegebenenfalls höherfunktionellen Homologen dieser Diisocyanate, bei Raumtemperatur flüssige, Carbodiimid- bzw. Uretonimin-modifizierte Derivate dieser Diisocyanate bzw. Polyisocyanatgemische, bei Raumtemperatur flüssige Urethan-modifizierte Derivate dieser Diisocyanate bzw. Polyisocyanatgemische, insbesondere solche der in DE-OS 2 624 526 beschriebenen Art, und bei Raumtemperatur flüssige Umsetzungsprodukte von 1 Mol 4,4'-Diisocyanatodiphenylmethan mit 0,05 bis 0,3 Mol eines oder mehrerer niedermolekularer Diole oder Triole, vorzugsweise Polypropylenglykole mit einem Molekulargewicht bis zu 700, wie sie beispielsweise gemäß De-OS 1 618 380 zugänglich sind. Auch NCO-Semiprepolymere auf Basis von 4,4'-Diisocyanatodiphenylmethan oder den zuletztgenannten besonders bevorzugten Polyisocyanaten und Polyhydroxylverbindungen der nachstehend unter b) beispielhaft genannten Art können als Ausgangsmaterialien a) beim erfindungsgemäßen Verfahren eingesetzt werden. Unter "NCO-Semiprepolymeren" sind in diesem Zusammenhang Umsetzungsprodukte der genannten Einzelkomponenten in einem NCO/OH-Äquivalentverhältnis von 2,2:1 bis 20:1, vorzugsweise 3:1 bis 10:1 zu verstehen.

Bei der Ausgangskomponente b) handelt es sich um mindestens eine Verbindung mit mindestens zwei gegenüber Isocyanatgruppen reaktionsfähigen Wasserstoffatomen und einem, aus der Funktionalität und dem Gehalt an gegenüber Isocyanatgruppen reaktionsfähigen Gruppen berechenbaren (durchschnittlichen) Molekulargewicht von 400 bis 12 000, vorzugsweise 1000 bis 7000 und insbesondere 2000 bis 6000. Besonders bevorzugt werden als Ausgangskomponente b) di- und/oder trifunktionelle Polyetherpolyole eingesetzt. Diese Polyetherpolyole werden in bekannter Weise beispielsweise durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie BF₃, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxydiphenylpropan, Anilin, Ethanolamin oder Ethylendiamin hergestellt. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß zumindest als Teil der Komponente b), die auch aus Gemischen verschiedenen Polyetherpolyole bestehen kann, in Frage.

Vielfach sind solche Polyether bevorzugt, die überwiegend (bis zu 90 Gew.-%, bezogen auf alle vorhandenen OH-Gruppen im Polyether) primäre OH-Gruppen aufweisen.

Als Ausgangskomponente b) kommen auch die sogenannten Aminopolyether oder Aminohydroxypolyether des obengenannten Molekulargewichtsbereichs in Betracht, deren endständige, gegenüber Isocyanatgruppen reaktiionsfähige Gruppen zumindest zu 25, vorzugsweise zu 50, und insbesondere zu 80-100 Äquivalentprozent aus primären und/oder sekundären, aromatisch oder aliphatisch gebundenen Aminogruppen und zum Rest aus primären und/oder sekundären, aliphatisch gebundenen Hydroxylgruppen bestehen.

In diesen Verbindungen können die die Aminogruppen tragenden, endständigen Reste mit der Polyetherkette auch über Urethan- oder Estergruppen verknüpft sein. Die Herstellung dieser "Aminopolyether" erfolgt in an sich bekannter Weise. So kann beispielsweise eine Aminierung von Polyhydroxypolyethern wie z.B. Polypropylenglykolethern durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-PS 1 193 671 wird die Herstellung von Polyethern mit Amino-Endgruppen durch Hydrierung von cyanethylierten Polyoxypropylenethern beschrieben. Weitere Methoden zur Herstellung von Polyoxyalkylen-(Polyether)-aminen sind in US-PS 3 155 728, US-PS 3 236 895 und FR-PS 1 551 605 beschrieben. In der FR-PS 1 466 708 wird beispielsweise die Herstellung von sekundäre Amino-Endgruppen aufweisenden Polyethern beschrieben.

Höhermolekulare Polyhydroxypolyether können durch Reaktion mit Isatosäureanhydrid in die entsprechenden, erfindungsgemäß als Komponente b) geeigneten Anthranilsäureester überführt werden, wie dies beispielsweise in DE-OS 2 019 432, DE-OS 2 619 840, US-PS 3 808 250, US-PS 3 975 428 oder US-PS 4 016 143 beschrieben ist. Auf diese Weise entstehen Polyether mit endständigen aromatischen Aminogruppen.

Durch Umsetzung von NCO-Prepolymeren auf Basis von Polyhydroxypolyethern mit Hydroxylgruppen aufweisenden Enaminen, Aldiminen oder Ketiminen und anschließende Hydrolyse erhält man gemäß DE-OS 2 546 536 bzw. Us-PS 3 865 791 höhermolekulare, endständige Aminogruppen aufweisende Verbindungen.

Ebenfalls einsetzbar sind andere Amino-Polyether des obengenannngen Molekulargewichtsbereichs, wie sie beispielsweise gemäß DE-OS 2 948 419, DE-OS 3 039 600 oder 3 131 252 erhalten werden können.

Selbstverständlich können als erfindungsgemäße Ausgangskomponente b) auch beliebige Gemische der beispielhaft genannten Verbindungen mit gegenüber Isocyanatgruppen reaktionsfähigen Gruppen eingesetzt werden.

Die erfindungsgemäß als Ausgangskomponente b) in Betracht kommenden Verbindungen mit gegenüber Isocyanat gruppen reaktionsfähigen Gruppen sind nicht auf die oben beispeilhaft erwähnten Verbindungen begrenzt.

So können beispielsweise beim erfindungsgemäßen Verfahren alle in der US-PS 4 218 543 beispeilhaft beschriebenen Verbindungen mit gegenüber Isocyanatgruppen reaktionsfähigen Gruppen des Molekulargewichtsbereichs 400 bis 12 000 eingesetzt werden.

Bei den gegebenenfalls mitzuverwendenden Ausgangsverbindungen c) handelt es sich um beliebige, mindestens zwei primäre bzw. sekundäre Aminogruppen und/oder Hydroxylgruppen aufweisende Kettenverlängerungsmittel bzw. Vernetzungsmittel des Molekulargewichtsbereichs 32 (Hydrazin) bis 399. Vorzugsweise werden die entsprechenden difunktionellen Verbindungen eingesetzt.

Als Beispiele für derartige Verbindungen seien genannt: Hydrazin, Ethylendiamin, Hexamethylendiamin, 1-Amino-3,3,5-trimethyl-5-aminomethyl-cyclohexan (IPDA), N,N'-Dimethylhydrazin, Ethylenglykol, Propylenglykol-(1,2) und -(1,3), 1,4-Dihydroxybutan, 1,6-Dihydroxyhexan Glycerin, Trimethylolpropan, Pentaerythrit, Chinit, Mannit, Diethylenglykol, Triethylenglykol, Tetraethylenglykol, Dipropylenglykol, Tripropylenglykol, Dibutylenglykol, Diethanolamin, Diisopropanolamin, 1,4-Diaminobenzol, 2,4-Diaminotoluol oder 4,4'-Diaminodiphenylmethan.

Zu den bevorzugten, beim erfindungsgemäßen Verfahren als Komponenten c) einzusetzenden Verbindungen gehören diprimäre aromatische Diamine, deren Molekulargewicht innerhalb des obengenannten Bereichs liegt, und die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 4, vorzugsweise 1 bis 3 Kohlenstoffatomen, aufweisen, besonders bevorzugt um solche, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele für solche bevorzugten bzw. besonders bevorzugten Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, beliebige technische Gemische der letztgenannten beiden Diamine, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 1-t-Butyl-3,5-dimethyl-2,4-diaminobenzol, 1-t-Butyl-3,5-dimethyl-2,6-diaminobenzol oder beliebige technische Gemische der letztgenannten beiden Diamine.

Zu den bevorzugten erfindungsgemäß als Komponente c) einzusetzenden Verbindungen gehören außerdem aliphatische Diole des Molekulargewichtsbereichs 62 bis 200 wie z.B. Ethylenglykol, 1,2-Dihydroxypropan und 1,4-Dihydroxybutan. Beliebige Gemische alkoholischer und/oder aminischer Aufbaukomponenten c) können selbstverständlich ebenfalls eingesetzt werden.

Die Aufbaukomponente c) kommt beim erfindungsgemäßen Verfahren in Mengen von 0 bis 50, vorzugsweise von 10 bis 40 Gew.-%, bezogen auf Komponente b) zum Einsatz.

Beim erfindungsgemäßen Verfahren können als gegebenenfalls mitzuverwendende Hilfs- und Zusatzstoffe d) beispielsweise die folgenden zum Einsatz gelangen:

- Treibmittel wie z.B.: Aceton, Ethylacetat und insbesondere halogensubstituierte Alkane wie Dichlormethan, Trichlormethan, Monofluortrichlormethan, Chlordifluormethan oder Dichlordifluormethan. Die Verwendung von Wasser ist prinzipiell möglich, jedoch weniger bevorzugt.

- Katalysatoren für die Isocyanat-Polyadditions-Reaktion der an sich bekannten Art, wie sie beispielsweise in US-PS 4 065 410, Kolonne 5, Zeile 59 bis Kolonne 6, Zeile 30 beschrieben sind.

- Oberflächenaktive Additive und sonstige Zusatzstoffe wie sie beispielsweise in US-PS 4 065 410, Kolonne 6, Zeile 34 bis Kolonne 7, Zeile 2 beschrieben sind.

- Gegenüber Isocyanatgruppen inerte Füllstoffe wie z.B. Glasfasern, die gegebenenfalls mit geeigneten Haftvermittlern oder Schlichten behandelt worden sind, in geschnittener oder gemahlener Form, die im allgemeinen eine mittlere Länge von 0,01 bis 10, vorzugsweise 0,05 bis 5 mm, einen mittleren Durch messer von 2 bis 50, vorzugsweise 5 bis 30 μm bei einem Verhältnis von mittlerer Länge zu mittlerem Durchmesser von 5000:1 bis 5:1, vorzugsweise 100:1 bis 5:1 aufweisen. Ferner sind als inerte Füllstoffe plättchenförmige oder schuppige Produkte wie Glasflakes oder solche auf Basis von Schichtsilikaten, Talk, Glimmer, Phlogopit oder Mica mit einem mittleren Durchmesser von 0,1 bis 5, vorzugsweise 0,3 bis 3,5 mm, einer mittleren Dicke von 0,01 bis 1, vorzugsweise 0,05 bis 0,2 mm bei einem Verhältnis von mittlerem Durchmesser zu mittlerer Dicke von 5:1 bis 500:1, vorzugsweise von 25:1 bis 200:1 geeignet. Weitere inerte Füllstoffe sind beispielsweise Asbest-, Serpentin-, Kohlenstoff-, Aramid-, Chrysotil- oder Eisenoxidfasern (nadelförmiges Eisenoxid), Kaltspat, Schwerspat, Kaolin, Kreide, Silikate, Aluminiumhydroxide, Quarzmehl, gefällte Kiselsäuren, Mikroglaskugeln, Metallpulver, Korund Schiefermehl, Blähton oder Zinkoxid.

- Innere Formtrennmittel wie beispielsweise Hydroxylgruppen aufweisende Fettsäureamide gemäß US-PS 4 374 222, Silikone gemäß EP-OS 103 367, Isocyanat-Additionsprodukte gemäß DE-OS 3 149 619, Polysiloxane gemäß DE-OS 2 543 638, Siloxan-modifizierte Urethane gemäß DE-OS 3 012 126, Carbalkoxysiloxane gemäß US-PS 4 111 861, aliphatische Glyoxime gemäß US-PS 4 111 861, Umsetzungsprodukte von Hydroxymethylgruppen aufweisenden Siloxanen mit Carbonsäuren gemäß DE-OS 2 363 452, Gemische aus Carbonsäuren und Aminsalzen gemäß DE-OS 1 953 637, Salze von Aminogruppen aufweisenden Polysiloxanen und langkettigen Fettsäuren gemäß DE-OS 2 427 273 oder DE-OS 2 445 648, Umsetzungsprodukte von Fettsäureestern mit Mono- und Polyisocyanaten gemäß DE-OS 2 307 589 oder DE-OS 2 319 648, Ricinolsäurefettsäureester gemäß DE-OS 2 404 310, fluorierte Urethanmischungen gemäß japanischer Patentanmeldung 58 111 898 (japanische Veröffentlichung 210370 vom 4.7.1983), Carbonsäureaminsalze gemäß DE-OS 2 431 968 und DE-OS 1 953 637, binäre oder ternäre Trennmittelgemische gemäß DE-OS 2 121 670, Umsetzungsprodukte aus Fettsäureestern und Polyisocyanaten gemäß DE-OS 2 306 276, Umsetzungsprodukte aus Polysiloxanen mit reaktionsfähigen Wasserstoffatomen und Mono- oder Polyisocyanaten gemäß DE-OS 2 356 692 oder andere bekannte innere Trennmittel gemäß Stand der Technik. Auch andere hydrophobierend wirkende Zusatzstoffe, die bislang weniger als innere Trennmittel verwendet worden sind, können als Zusatzstoffe eingesetzt werden. Hierzu gehören beispielsweise Fettalkohole wie beispeilsweise Hexadecanole, Octadecanole, Hexadecenole oder Octadecenole, gegebenenfalls alkoxylierte Fettsäureamide wie beispielsweise Stearinsäureamid, Ölsäureamid oder die entsprechenden N,N-bisalkoxylierten Derivate dieser Amide, die durch Alkoxylierung der Amide mit Ethylenoxid und/oder Propylenoxid zugänglich sind, Fettsäuren der soeben beispielhaft genannten Art oder Hydroxyl-aufweisende Fettsäuren wie beispeilsweise Ricinolsäure oder schließlich auch Wachse wie z.B. Bienenwachs oder auch synthe tische Wachse wie beispeilsweise Polyethylenwachse, sowie auch die Umsetzunsprodukte von Ricinolsäure und/oder anderern Hydroxylgruppen aufweisenden Carbonsäuren mit Ricinolsäure und/oder anderen Hydroxylgruppen aufweisenden Carbonsäuren und/oder Alkandiolen, die Hydroxylzahlen von 10 bis 200 und Säurenzahlen von 0 bis 200 aufweisen.

Bei den besonders bevorzugten inneren Trennmitteln handelt es sich um Salze des Magnesiums, Calciums, Aluminiums und insbesondere Zinks mit mindestens 8, vorzugsweise 12 bis 18 Kohlenstoffatomen aufweisenden Carbonsäuren wie Stearinsäure, isomeren Stearinsäuren, Palmitinsäure, Ölsäure oder Naphthensäure, vorzugsweise Stearinsäure oder isomeren Stearinsäuren. Diese als Trennmittel wirkenden Salze werden oftmals in Kombination mit Verträglichkeitsmachern eingesetzt. Derartige Verträglichkeitsmacher sind beispielsweise die für diesen Zweck in US-PS 4 519 965, Kolonne 3, Zeile 65 bis Kolonne 5, Zeile 25 genannten Polyamine bzw. Polyamingemische. Bezüglich der Mengenverhältnisse der Metallsalze zu diesen Verträglichkeitsmachern gelten die in dem genannten US-Patent gemachten Ausführungen.

Bei der erfindungswesentlichen Komponente e) handelt es sich um Oligoharnstoffe eines unter 5.000, vorzugsweise bei 212 bis 2.000 liegenden mittleren Molekulargewichts. Es handelt sich bei diesen Verbindungen im wesentlichen um hochschmelzende, in den Ausgangsmaterialien a) bis d) unlösliche Verbindungen. Die Oligoharnstoffe werden beim erfindungsgemäßen Verfahren in Pulverform verwendet und vorab der Reaktivkomponente für die Polyisocyanatkomponente a) zugemischt. Die Zumischung erfolgt durch einfaches Verrühren der Ausgangsmaterialien, da die feinteiligen, im allgemeinen einen mittleren Teilchendurchmesser von 0,1 bis 30 μm aufweisenden Oligoharnstoffpulver in der Reaktivkomponente ausreichend stabil dispergierbar sind.

Die Herstellung der Oligourethane erfolgt durch Umsetzung von organischen Polyaminen mit mindestens zwei primären oder sekundären Aminogruppen, vorzugsweise aromatischen Diaminen mit zwei primären Aminogruppen mit aromatischen Polyisocyanaten, vorzugsweise Diisocyanaten bei -20 bis 100° C. Die Umsetzung erfolgt in Gegenwart eines Lösungsmittels für die Ausgangsmaterialien, in welchem jedoch die sich bildenden Oligoharnstoffe unlöslich sind und sofort nach ihrer Bildung in Form von leicht filtrierbaren Pulvern ausfallen. Die Pulver können dann sofort, vorzugsweise nach Verdunsten des Lösungsmittels, beim erfindungsgemäßen Verfahren eingesetzt werden.

Die Polyisocyanate bzw. Polyamine kommen bei der Umsetzung in solchen Mengen zum Einsatz, die einem Äquivalentverhältnis von Aminogruppen zu Isocyanatgruppen von 1,1:1 bis 3:1, vorzugsweise 2:1 bis 3:1 (Aminüberschuß) bzw. vo 1:1,1 bis 1:3, vorzugsweise 1:2 bis 1:3 (Isocyanatüberschuß) entsprechen. Dies bedeutet, daß es sich bei den Oligoharnstoffen entweder um solche mit endständigen Aminogruppen oder um solche mit endständigen Isocyanatgruppen handelt. Durch die Verwendung eines Überschusses einer der beiden Ausgangskomponenten wird sichergestellt, daß das Molekulargewicht der Oligoharnstoffe innerhalb der obengenannten Grenzen liegt. Die gemachten Angaben bezüglich des Molekulargewichts der Oligoharnstoffe beziehen sich auf das aus den Mengen der Ausgangsmaterialien errechenbare mittlere Molekulargewicht. Da es sich um einen Mittelwert handelt, können in den bei der Herstellung der Oligoharnstoffe anfallenden Gemischen auch Einzelkomponenten mit einem über 5.000 liegenden Molekulargewicht vorliegen.

Geeignete Polyisocyanate zur Herstellung der Oligoharnstoffe sind beispielsweise die oben bei der Beschreibung der Komponente a) genannten Verbindungen. Vorzugsweise werden aromatische Diisocyanate wie 1,3- und 1,4-Diisocyanatobenzol, 2,4- und/oder 2,6-Diisocyanatotoluol, 2,4'- und/oder 4,4'-Diisocyanatodiphenylmethan oder 1,5-Diisocyanatonaphthalin eingesetzt.

Für die Herstellung der Oligoharnstoffe geeignete Polyamine sind insbesondere Diamine wie Hydrazin, Hydrazinhydrat, Ethylendiamin, Hexamethylendiamin, 1-Amino-3,3,5-trimethyl-5-aminomethyl-cyclohexan (IPDA), N,N'-Dimethylhydrazin 1,3-, 1,4-Diaminobenzol, aber auch alkylsubstituierte Diaminobenzole, wie 2,4-Diaminomesitylen, 1,3,5-Triethyl-2,4-diaminobenzol, 1,3,5-Triisopropyl-2,4-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 1-t-Butyl-3,5-dimethyl-2,4-diaminobenzol, 1-t-Butyl-3,5-dimethyl-2,6-diaminobenzol oder beliebige technische Gemische der letztgenannten beiden Diamine.

Besonders bevorzugt sind 2,4- und 2,6-Diaminotoluol, 4,4'- und 2,4'-Diaminodiphenylmethan bzw. beliebige Gemische der genannten Isomeren, 1-Methyl-3-5-diethyl-2,4-diaminobenzol, 1-Methyl-3,5-diethyl-2,6-diaminobenzol bzw. beliebige technische Gemische der letztgenannten beiden Diamine.

In obigem Zusammenhang sollen der Begriff "Diamin" auch Hydrazin und der Begriff "Oligoharnstoff" auch die obigen Ausführungen entsprechenden Umsetzungsprodukte von Hydrazin mit den Polyisocyanaten umfassen.

Bei der Durchführung des erfindungsgemäßen Verfahrens kommen die Reaktionspartner im übrigen in, einer NCO-Kennzahl von 70 bis 150, vorzugsweise 90 bis 120 entsprechenden, Mengen zum Einsatz. Unter NCO-Kennzahl versteht man hierbei den Quotienten aus Anzahl der Isocyanatgruppen und Anzahl der gegenüber Isocyanaten reaktiven Gruppen, multipliziert mit 100. In die Berechnung der Isocyanat-Kennzahl gehen hierbei die gegebenenfalls in den Trennmitteln vorliegenden, gegenüber Isocyanatgruppen reaktionsfähigen Gruppen (Carboxylgruppen) nicht ein. Bei der Durchführung des erfindungsgemäßen Verfahrens wird nach der bekannten Reaktionsspritzgußtechnik (RSG-Verfahren) gearbeitet. Hierbei kommen im allgemeinen zwei Reaktionskomponenten zum Einsatz, wobei die Polyisocyanatkomponente a) die erste und das Gemisch aus den Komponenten b) bis e) die zweite Komponente, d.h. die gegenüber der Polyisocyanatkomponente reaktionsfähige "Reaktivkomponente" darstellt. Lediglich in Ausnahmefällen kann es auch zweckmäßig sein, beispielsweise bei der Verwendung von Isocyanatgruppen aufweisenden Trennmitteln diese vor der Durchführung des erfindungsgemäßen Verfahrens der Polyisocyanatkomponente a) einzuverleiben. Grundsätzlich ist es selbstverständlich auch möglich, solche Mischköpfe zu verwenden, die den Einsatz von drei oder vier getrennten Komponenten bei der Durchführung des erfindungsgemäßen Verfahrens gestatten, so daß eine Vormischung der Einzelkomponenten nicht erforderlich ist. Die Menge des in die Form eingebrachten, gegebenenfalls schäumfähigen Gemischs wird im übrigen so bemessen, daß die Formkörper eine Dichte von 0,1 bis 1,4 g/cm³, vorzugsweise von 0,2 bis 1,3 g/cm³ aufweisen. Die Formkörper können oft schon nach einer Formstandzeit von 5 bis 90, vorzugsweise 20 bis 90 Sekunden entformt werden.

Als Ausgangstemperatur des in die Form eingebrachten Gemisches wird im allgemeinen eine Temperatur zwischen 10 und 60° C, vorzugsweise 20 und 50° C, gewählt. Die Temperatur der Form beträgt im allgemeinen 40 bis 100° C, vorzugsweise 50 bis 70° C.

Grundsätzlich ist es möglich, bei der Durchführung des erfindungsgemäßen Verfahrens aus der Komponente a) und zumindest einem Teil der Komponente b) und/oder c) ein NCO-Semiprepolymer herzustellen und dieses in einer zweiten Reaktionsstufe mit der restlichen Menge der Komponente b) bzw. c) zur Umsetzung zu bringen. Eine derartige zweistufige Arbeitsweise ist jedoch weniger bevorzugt.

Der erfindungswesentliche Punkt liegt in der Mitverwendung der beispielhaft genannten Harnstoffe e). Dies führt selbst bei den geringen eingesetzten Mengen zu einer deutlichen Reduzierung des sonst vorhandenen Restschrumpfs bzw. zu einer Verlangsamung des Schrumpfungsvorganges. Insbesondere in Verbindung mit den oben beispielhaft genannten Füllstoffen d) und den oben beispielhaft genannten inneren Formtrennmitteln gestattet das erfindungsgemäße Verfahren die Herstellung von komplizierten Formteilen ohne Entformungsprobleme.

In den nachfolgenden Beispielen beziehen sich alle Prozentangaben auf Gewichtsprozente und alle Angaben in "Teilen" auf Gewichtsteile.

**Beispiel 1** (Herstellung eines Oligoharnstoffs)

In eine Lösung von 2 Mol 4,4'-Diaminodiphenylmethan in 5 l Chlorbenzol wird 1 Mol 4,4'-Diisocyanatodiphenylmethan innerhalb von 1 h bei 50° C unter Rühren zudosiert. Anschließend wird eine weitere Stunde bei 70° C gerührt. Der entstandene Oligoharnstoff fällt sofort aus und kann durch Abnutschen vom Lösungsmittel befreit werden.
Ausbeute: 100 %
Schmelzpunkt: 340° C
Teilchengröße: Die Hauptmenge bestand aus Pulvern eines maximalen Teilchendurchmessers von 15 μm, daneben lagen geringe Mengen an Agglomeraten eines Teilchendurchmessers von bis zu 170 μm vor.

**Beispiel 2** (Herstellung eines Oligoharnstoffs)

2 Mol eines Isomerengemischs aus 1-Methyl-3,5-diethyl-2,4-(bzw. 2,6-)-diaminobenzol (Gewichtsverhältnis 80:20) werden bei Raumtemperatur in 5 l Chlorbenzol gelöst. Unter gleichzeitiger Kühlung wird in diese Lösung anschließend 1 Mol 4,4'-Diisocyanatodiphenylmethan bei 30° C zugetropft. Anschließend wird eine halbe Stunde bei dieser Temperatur nachgerührt. Man erhält in 100 %iger Ausbeute den entsprechenden Oligoharnstoff in Form eines weißen Pulvers, welches durch einfaches Filtrieren vom Lösungsmittel befreit werden kann.
Schmelzpunkt: 330° C
Teilchengröße: Hauptmenge maximal 30 μm Teilchendurchmesser, geringe Menge an Agglomeraten mit Teilchendurchmessern von bis zu 140 μm.

**Beispiel 3** (erfindungsgemäßes Verfahren)

Ausgangsmaterialien:

Polyisocyanatkomponente:

NCO-Semiprepolymer mit einem NCO-Gehalt von 19 %, hergestellt durch Umsetzung einer überschüssigen Menge von Ureton-modifiziertem 4,4'-

Diisocyanatodiphenylmethan mit einem Polyesterpolyol der OH-Zahl 56 auf Basis von Adipinsäure und einem Gemisch gleicher Gewichtsteile Ethylenglykol und 1,4-Dihydroxybutan.

### Aminopolyether:

Der in nachstehendem Beispiel eingesetzte Aminopolyether weist eine NH-Zahl von 44 auf und wurde durch Hydrolyse der Isocyanatgruppen eines NCO-Prepolymeren des NCO-Gehalts 3,4 % erhalten. Das NCO-Prepolymer seinerseits wurde durch Umsetzung von 2,4-/2,6-Diisocyanatotoluol (Isomerenverhältnis 80:20) mit einem Polyethergemisch der OH-Zahl 50 erhalten, wobei das Polyethergemisch aus A) einem Polyether der OH-Zahl 35, hergestellt durch Propoxylierung von Glycerin und anschließende Ethyoxylierung des Propoxylierungsprodukts (PO:EO-Gewichtsver hältnis = 87:13) und B) einem Polyetherpolyol der OH-Zahl 56 und einer OH-Funktionalität von 2,5, hergestellt durch Propoxylierung eines entsprechenden Gemischs aus Wasser und Trimethylolpropan, bestand. Das NCO/OH-Äquivalentverhältnis bei der Herstellung der NCO-Prepolymeren lag bei 2:1.

### DETDA:

Ein Gemisch aus 65 % 1-Methyl-3,5-diethyl-2,4-diaminobenzol und 35 % 1-Methyl-3,5-diethyl-2,6-diaminobenzol.

### Inneres Formtrennmittel:

Ein handelsübliches inneres Formtrennmittel (PU 0733 A der BAYER AG).

### Rizinusöl

### Oligoharnstoff:

Produkt gemäß Beispiel 2.

62 Teile des Aminopolyethers, 30 Teile DETDA, 6 Teile inneres Formtrennmittel, 2 Teile Rizinusöl und 1,5 Teile Oligoharnstoff werden zu einer "Reaktivkomponente" vermischt.

Unter Verwendung einer Hochdruckkolbendosieranlage der Firma Hennecke, Birlinghoven ("®RIMDOMAT") wird diese Reaktivkomponente mit der obengenannten Polyisocyanatkomponente unter Einhaltung einer Isocyanatkennzahl von 105 verarbeitet. Als Werkzeug diente eine Plattenform der Maße 540 x 320 x 4 mm aus Stahl, deren Innenwände vor Befüllen mit einem handelsüblichen äußeren Formtrennmittel beschichtet worden ist (®Chemtrend RCTW 2006 der Firma Chemtrend.

### Verarbeitungsbedingungen:

Verarbeitungsdruck: 200/200 bar
Temperatur der Reaktivkomponente: 60° C
Temperatur der Polyisocyanatkomponente: 50° C
Formtemperatur: 65° C
Formstandzeit: 30 sec

### Befund:

Es entsteht ein Polyharnstofformkörper der Dichte 1,15 g/cm$^3$, wobei beim Öffnen der Form keinerlei Schwindung festgestellt wird.

### Beispiel 4 (Vergleichsbeispiel)

Beispiel 3 wird ohne Mitverwendung des erfindungswesentlichen Oligoharnstoffs wiederholt.

### Befund:

Bereits beim Öffnen der Form zeigt sich ein starker Schrumpf des Formteils, der sich innerhalb weniger Sekunden anch Öffnen der Form noch sichtbar weiter verstärkt.

Nach mehrtägiger Lagerung der Formkörper gemäß Beispielen 3 und 4 bei Raumtemperatur zeigten beide den gleichen Schrumpf.

## Ansprüche

1. Verfahren zur Herstellung von gegebenenfalls zellförmigen Formkörpern auf Polyurethan- und/oder Polyharnstoff-Basis mit einer geschlossenen Oberfläche durch Umsetzung nach dem Reaktionsspritzgußverfahren in einer geschlossenen Form eines Reaktionsgemisches aus

a) mindestens einem organischen Polyisocyanat,

b) mindestens einer Verbindung mit einem Molekulargewicht zwischen 400 und 12 000, welche mindestens zwei gegenüber Isocyanatgruppen reaktionsfähige Gruppen aufweist,

c) gegebenenfalls mindestens einer Verbindung mit einem Molekulargewicht zwischen 32 und 399 mit mindestens zwei gegenüber Isocyanatgruppen reaktionsfähigen Gruppen, und gegebenenfalls

d) den aus der Polyurethanchemie bekannten Hilfs- und Zusatzstoffen,

dadurch gekennzeichnet, daß man dem Reaktionsgemisch als weitere Komponente

e) in Abwesenheit der Komponente b) hergestellte, pulverförmige Oligoharnstoffe eines unter 5000 liegenden mittleren Molekulargewichts, die durch Umsetzung von organischen Polyisocyana ten mit Hydrazin und/oder organischen Diaminen erhalten worden sind,

in einer Menge von 0,01 bis 3 Gew.-%, bezogen auf das Gewicht der Komponenten a), b), c) und d) einverleibt.

2. Verfahren gemäß Anspruch 1, dadurch gekennzeichnet, daß man als Komponente a) ein bei Raumtemperatur flüssiges, gegebenenfalls carbodiimid-, uretonimin-und/oder urethanmodifiziertes Polyisocyanat oder Polyisocyanatgemisch der Diphenylmethanreihe verwendet.

3. Verfahren gemäß Anspruch 1 und 2, dadurch gekennzeichet, daß man als Komponente b) mindestens ein di- oder trifunktionelles Polyetherpolyol des Molekulargewichtsbereichs 1000 bis 7000 verwendet.

4. Verfahren gemäß Anspruch 1 und 2, dadurch gekennzeichet, daß man als Komponente b) mindestens eine Verbindung des Molekulargewichtsbereichs 1000 bis 7000 verwendet, deren gegenüber Isocyanaten reaktionsfähigen Gruppen zu mindestens 25 % aus primären Aminogruppen und zum Rest aus alkoholischen Hydroxylgruppen bestehen.

5. Verfahren gemäß Anspruch 1 bis 4, dadurch gekennzeichet, daß man als Komponente c) (i) mindestens ein aromatische Diamin, welches in ortho-Stellung zu einer ersten Aminogruppe mindestens einen Alkyl substituenten mit 1 bis 4 Kohlenstoffatomen und in beiden ortho-Stellungen zur zweiten Aminogruppe Alkylsubstituenten mit 1 bis 3 Kohlenstoffatomen aufweist, und/oder (ii) mindestens ein aliphatisches Diole des Molekulargewichtsbereichs 62 bis 200 in einer Gesamtmenge von 10 bis 40 Gew.-%, bezogen auf die Komponente b) verwendet.

6. Verfahren gemäß Anspruch 1 bis 5, dadurch gekennzeichnet, daß man als Komponente d), gegebenenfalls neben weiteren Hilfs- und Zusatzstoffen, plättchen-oder faserförmige Füllstoffe verwendet.

7. Verfahren gemäß Anspruch 1 bis 6, dadurch gekennzeichnet, daß man als Komponente d), gegebenenfalls neben weiteren Hilfs- und Zusatzstoffen, innere Formtrennmittel verwendet.

8. Verfahren gemäß Anspruch 1 bis 7, dadurch gekennzeichnet, daß man durch Abmischung der Komponenten b) bis e) eine Reaktivkomponente herstellt und diese mit der Komponente a) nach dem Einstufen-Verfahren unter Einhaltung einer Isocyanatkennzahl von 70 bis 150 zur Reaktion bringt.